# EUROPÄISCHE PATENTSCHRIFT

(11) **EP 0 525 220 B1**
(45) Veröffentlichungstag und Bekanntmachung des Hinweises auf die Patenterteilung: **16.03.1994**
(21) Anmeldenummer: 91112102.8
(22) Anmeldetag: 19.07.1991
(51) Int. Cl.: G01G 19/14, G01G 23/18

(54) **Traversenwaage**
Weighing beam
Traverse peseuse

(43) Veröffentlichungstag der Anmeldung: 03.02.1993
(73) Patentinhaber: Back, Klaus, D-77815 Bühl (DE)
(72) Erfinder: Back, Klaus, D-77815 Bühl (DE)
(74) Vertreter: Zipse + Habersack

(56) Entgegenhaltungen:
- EP-A- 0 143 713
- DE-C- 3 629 158
- DE-U- 9 108 884
- FR-A- 2 320 891
- MEASUREMENT TECHNIQUES, Bd. 32, Nr. 8, August 1989, New York, US, Seiten 777-779; A.S. Kukui et al: "Strain-gauge beam crane weighing machines"
- AUTOMATISME, Bd. 15, Nr. 10, Oktober 1970, Paris, FR, Seiten 531-533; "Pesage éléctronique sur pont roulant"
- Schenck Prospekte D 4109, Juni 1986 und D 4100, Juli 1989

## Beschreibung

Die Erfindung betrifft eine Traversenwaage mit elektronischen Kraftaufnahmesensoren und einer Auswertevorrichtung mit Digitalanzeige, sowie einer Lasttraverse mit in den Endbereichen angeordneten Befestigungselementen für Seilzüge.

In der DE-PS 36 29 158 ist eine elektromechanische Kranwaage mit elektronischer Digitalanzeige beschrieben, bei der in einem Rahmen zwischen Kranzug und Lasthaken eine nach dem Dehnungsprinzip arbeitende, elektromechanische Kraftmeßeinrichtung angeordnet ist, die mit einer elektronischen Schaltung zur Auswertung und digitalen Anzeige des Gewichts der am Lasthaken befindlichen Last verbunden ist. Dabei sind symmetrisch zur Kranzugachse auf einer mit dem Kranzug kraftschlüssig verbundenen und senkrecht dazu verlaufenden Grundplatte mindestens zwei Wägezellen angeordnet, die mit ihren dem Lasthaken gegenüberliegenden stirnseitigen Flächen an je einem Verbindungsteil zwischen zwei Zugwangen anliegen, zwischen welchen die Lagerung für den schwenkbaren Lasthaken angeordnet ist.

Die vorbekannte Kranwaage kann bei einem einfachen Kranzug vorteilhaft eingesetzt werden, da ihre Anordnung zwischen Kranzug und Lasthaken erfolgt. Ihr Einsatz ist aber auf diese Anwendungsweise beschränkt.

Der vorliegenden Erfindung liegt die Aufgabe zugrunde, eine sogenannte "Traversenwaage" zu schaffen, mit der an einer bekannten und vielfach verwendeten Lasttraverse hängende Lasten eichmeßgenau gewogen werden können, wobei die vorhandene Lasttraverse ohne technische Veränderungen weiterverwendet werden kann.

Zur Lösung der gestellten Aufgabe wird eine Traversenwaage der eingangs genannten Art vorgeschlagen, welche dadurch gekennzeichnet ist, daß die Kraftaufnahmesensoren, wie Wägezellen, in einer zwischen weiteren Befestigungselementen und der Lasttraverse angeordneten, zusätzlichen Traverse angeordnet sind, auf der die elektronische Auswertevorrichtung mit digitaler Anzeige befestigt ist.

Es sind zwar schon Lasttraversen bekanntgeworden, in welche die Kraftaufnahmesensoren, nämlich die Wägezellen oder andere zur Gewichtsbestimmung notwendige Elemente, eingebaut sind, dies bedeutet aber, daß die Lasttraverse, die vielfach an Verladeplätzen od. dgl. vorhanden ist, einer komplizierten technischen Änderung unterworfen werden muß. Die Traversenwaage gemäß der vorliegenden Erfindung weist den wesentlichen Vorteil auf, daß sie direkt in Verbindung mit der vorhandenen Lasttraverse eingesetzt werden kann, ohne daß in die Lasttraverse zusätzliche Wägezellen eingebaut werden müssen. Dadurch können die vielfältigen Anschlagmittel der vorhandenen Traverse, wie Haken, Doppelhaken, Hebemagnete, Schäkel usw., unverändert weiterbenutzt werden. Es muß auch keine neue Lasttraverse konstruiert und gebaut werden, was erhebliche Kosteneinsparungen bedeutet.

Gemäß einer besonderen Ausführungsform weist die zusätzliche Traverse im Bereich der Befestigungselemente der Lasttraverse Einrichtungen zwischen den Befestigungselementen auf, innerhalb welcher die Kraftübertragungssensoren, nämlich die Wägezellen, für die Auswertevorrichtung angeordnet sind.

Eine weitere Ausführungsmöglichkeit der Traversenwaage gemäß der Erfindung besteht darin, daß die zusätzliche Traverse aus zwei U-förmigen, im Abstand voneinander angeordneten Schienen besteht, zwischen denen zu beiden Seiten je eine Lagerhalterung für eine Seilrolle oder einen Haken angeordnet ist, welche Lagerhalterung mit einer Grundplatte verbunden ist, auf der je eine Wägezelle sitzt, die mit je einem Pendellager verbunden ist, auf dem ein mit einem Zugstück verbundenes Druckstück liegt, wobei das Zugstück über einen Bolzen od. dgl. mit der entsprechenden Lagerhalterung an der Lasttraverse verbunden ist.

Diese Anordnung hat den wesentlichen Vorteil, daß die Seilrolle, der Haken od. dgl. in einfacher Weise aus der Lagerhalterung der Lasttraverse entfernt und in die entsprechend ausgebildete Lagerhalterung an der zusätzlichen Traverse der Traversenwaage eingesetzt werden kann. Dadurch ist es möglich, mit einfachen Handgriffen die Traversenwaage gemäß der Erfindung in eine vorhandene Lasttraversenanordnung einzusetzen.

Gemäß einer weiteren Ausbildung der Erfindung kann die Anzeigevorrichtung mit der Auswerteelektronik auf der zusätzlichen Traverse sichtbar innerhalb eines Schutzgehäuses angeordnet sein, wobei die beiden Wägezellen über Kabel mit der auf der zusätzlichen Traverse angeordneten Auswertevorrichtung mit Digitalanzeige verbunden sind.

Durch diese Anordnung ist es möglich, daß das Gewicht der unterhalb der Traversenwaage befindlichen Last in direkter Sicht abgelesen werden kann.

Weitere Vorteile der erfindungsgemäßen Traversenwaage bestehen darin, daß sie sehr leicht ausgeführt werden kann, weil sie keinem Biegemoment durch etwa an der Mitte angehängte Lasten ausgesetzt ist. Die Lasten hängen nämlich weiterhin an der vorhandenen Lasttraverse. Ferner kann durch einfaches Ummontieren ohne konstruktive Änderung der ursprüngliche Zustand der Krananlage wieder hergestellt werden.

Es ist ferner möglich, die Traversenwaage durch einfaches Ummontieren ohne Ändern der vorhandenen Lasttraverse an einem anderen Kran, z. B. in einer anderen Halle, einzusetzen.

Von besonderem Vorteil ist auch, daß ein Schrägzug der Drahtseile des Krans, der durch das Auf- und Abwickeln auf der Drahtseiltrommel entsteht, keinen Einfluß auf die Wägegenauigkeit hat. Die Traversenwaage kann fabrikmäßig fertig vormontiert werden und stellt eine funktionsfähige Wägeeinheit mit Traverse, Wägezellen, Kraftleitung, Auswerteelektronik, digitaler Gesamtanzeige und Stromversorgung (Akku) dar.

Schließlich müssen bei der Anwendung keine empfindlichen Meßleitungen von den Wägezellen zur vorhandenen Kranbrücke verlegt werden. Dadurch entstehen keine Störungen durch Abreißen der sonst frei herumhängenden Meßleitungen oder durch elektrische Einflüsse aus der Netzversorgung (Störimpulse).

Schließlich ist die sehr einfache Montage, die in kürzester Zeit durchgeführt werden kann, hervorzuheben. Die Stillstandszeit der Krananlage wird dabei auf ein Minimum, z. B. eine halbe Stunde, reduziert. Dies bedeutet wiederum eine enorme Kostenersparnis gegenüber konstruktiven Änderungen der Lasttraverse oder der Laufkatzen durch den etwaigen Einbau von Wägezellen.

Anhand der Zeichnungen soll am Beispiel einer bevorzugten Ausführungsform die Traversenwaage gemäß der Erfindung näher erläutert werden.

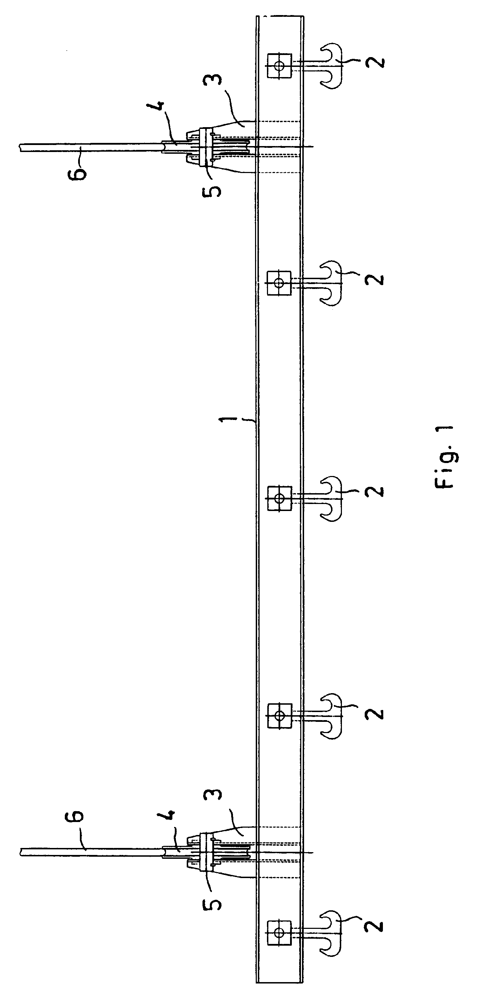

In den Zeichnungen zeigt
- Fig. 1: eine prinzipielle Seitenansicht einer vorhandenen und bekannten Lasttraverse.
- Fig. 2: zeigt eine Lasttraverse gemäß Fig. 1 mit eingesetzter Traversenwaage in Seitenansicht.
- Fig. 3: zeigt eine Detailansicht einer Aufhängung der Traversenwaage mit Teilschnitt.
- Fig. 4: zeigt einen Querschnitt von Fig. 3.
- Fig. 5: zeigt eine andere Befestigungsmöglichkeit der Traversenwaage an einem Seilhaken.

Wie sich aus den Figuren der Zeichnung ergibt, besteht eine normale Lasttraverse aus zwei U-förmigen Schienen 1, die im Abstand voneinander angeordnet sind und zwischen denen in bestimmten Abständen Lastaufnahmemittel, wie z. B. Doppelhaken 2, angeordnet sind. Im Bereich der äußeren Enden der Lasttraverse sind an Lagerhalterungen 3 Seilrollen 4 mittels Rollenbolzen 5 drehbar gelagert angeordnet. Über die Seilrollen 4 verlaufen die mit dem Kran verbundenen Zugseile 6.

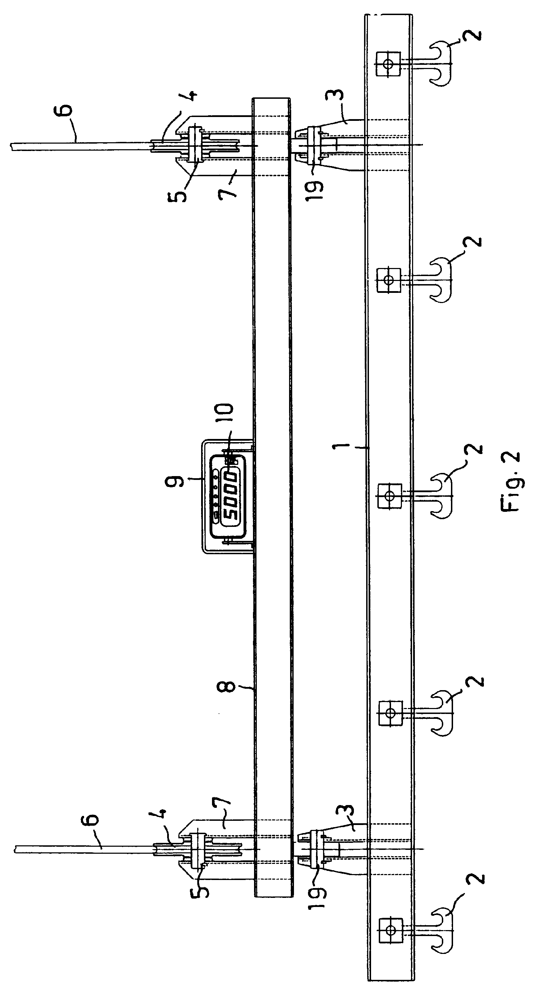

Wie sich aus Fig. 2 ergibt, sind die Seilrollen 4 aus den Lagerhalterungen 3 der Lasttraverse 1 entfernt und in Lagerhalterungen 7 einer zusätzlichen Traverse 8 mittels der Rollenbolzen 5 eingesetzt. Auf der zusätzlichen Traverse 8 ist in einem Gehäuse 9 die elektronische Auswertevorrichtung mit der digitalen Anzeigevorrichtung 10 sichtbar angeordnet.

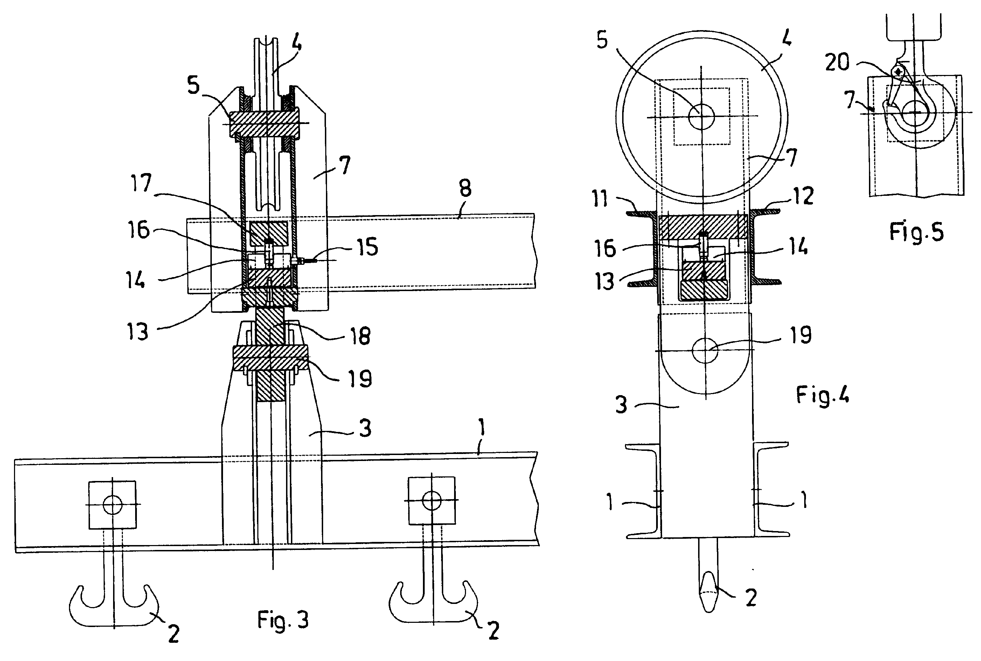

Wie sich aus den Figuren 3 und 4 ergibt, besteht die zusätzliche Traverse 8 aus zwei U-förmigen Schienen 11, 12, die im Abstand voneinander angeordnet sind und die zwischen sich die Lagerhalterung 7 aufnehmen. Die Lagerhalterung 7 ist an der Unterseite mit einer Grundplatte 13 verbunden, auf der die Wägezelle 14 sitzt, die über einen Kabelanschluß 15 mit der elektronischen Auswertevorrichtung verbunden ist. In der Wägezelle 14 sitzt ein Pendellager 16, auf dem ein Druckstück 17 aufliegt. Das Druckstück 17 ist mit dem Zugstück 18 verbunden, das über einen weiteren Bolzen 19 mit der Lagerhalterung 3 der Lasttraverse 1 verbunden ist.

Die zu wiegenden Lasten werden wie zuvor an die Lastaufnahmemittel, wie z. B. Doppelhaken 2, Einfachhaken, Lastmagnete oder Schäkel, der Lasttraverse 1 angehängt.

Über das Zugstück 18, das Druckstück 17 und das Pendellager 16 wird die Kraft als Druckkraft in die Wägezelle 14 eingeleitet. Die Wägezelle wandelt die zu messende Kraft in ein elektrisches Signal um (bei Nennlast 2 mV/ V). Das elektrische Meßsignal wird dann über den Kabelanschluß 15 der Auswerteelektronik zugeführt und mit der digitalen Anzeigevorrichtung 10 als Kilogramm angezeigt. Genau die in Fig. 3 dargestellte Anordnung befindet sich auf der anderen Seite, so daß sich die digitale Anzeigevorrichtung in dem Gehäuse 9 symmetrisch zwischen den beiden Wägezellen befindet.

Die bisher in die Lasttraversen eingebauten Seilrollen werden ausgebaut und in die Lagerhalterung 17 der Zwischentraverse 8 eingesetzt. Anschließend wird die vorhandene, konstruktiv unveränderte Lasttraverse 1 an das Zugstück 18 der Traversenwaage mittels des Bolzens 19 angehängt.

Wie sich aus Fig. 5 ergibt, ist es auch möglich, anstelle der Seilrolle 4 einen Haken 20 vorzusehen, der über ein Seil mit dem Kran verbunden ist.

## Patentansprüche

1. Traversenwaage mit elektronischen Kraftaufnahmesensoren (14) und einer Auswertevorrichtung mit Digitalanzeige (10), einer Lasttraverse (1) mit in den Endbereichen angeordneten Befestigungselementen (3) für Seilzüge, **dadurch gekennzeichnet**, daß die Kraftaufnahmesensoren (14), wie Wägezellen, in einer zwischen weiteren Befestigungselementen (4) und der Lasttraverse (1) angeordneten, zusätzlichen Traverse (8) angeordnet sind, auf der die elektronische Auswertevorrichtung mit digitaler Anzeige (10) befestigt ist.

2. Traversenwaage nach Anspruch 1, **dadurch gekennzeichnet,** daß die zusätzliche Traverse (8) im Bereich der Befestigungselemente der Lasttraverse (1) Einrichtungen (7, 19) zum Einsetzen zwischen den Befestigungselementen aufweist, innerhalb welcher die Kraftübertragungssensoren, wie Meßzellen od. dgl., für die elektronische Auswertevorrichtung angeordnet sind.

3. Traversenwaage nach Anspruch 1, **dadurch gekennzeichnet,** daß die zusätzliche Traverse (8) aus zwei U-förming, im Abstand voneinander angeordneten Schienen (11, 12) besteht, zwischen denen zu beiden Seiten je eine Lagerhalterung (7) für eine Seilrolle (4) oder einen Haken (20) angeordnet ist, welche Lagerhalterung mit einer Grundplatte (13) verbunden ist, auf der je eine Wägezelle (14) sitzt, die mit je einem Pendellager (16) verbunden ist, auf dem ein mit einem Zugstück (18) verbundenes Druckstück (17) liegt, wobei das Zugstück (18) über einen Bolzen (19) mit der Lagerhalterung (3) an der Lasttraverse (1) verbunden ist.

4. Traversenwaage nach einem der vorhergehenden Ansprüche, **dadurch gekennzeichnet**, daß die elektronische Auswertevorrichtung und die digitale Anzeigevorrichtung (10) auf der zusätzlichen Traverse (8) sichtbar, vorzugsweise in einem Gehäuse (9), angeordnet ist und die beiden Wägezellen über Kabelanschlüsse (15) mit der elektronischen Auswertevorrichtung verbunden sind.

## Claims

1. Weighing beam with electronic power-receiving sensors (14) and an evaluation device with digital display (10), a load beam (1) with fixing elements (3) for cable connectors arranged in the end regions thereof
characterised in that
the power-receiving sensors (14), such as weighing cells, are arranged on a supplementary beam (8) which is arranged between further fixing elements (4) and the load beam (1), on which supplementary beam the electronic evaluation device with digital display (10) is secured.

2. Weighing beam according to Claim 1, characterised in that the supplementary beam (8) has, in the region of the fixing elements of the load beam, devices (7, 19) for insertion between the fixing elements, within which the power-receiving sensors, such as measuring cells or the like, for the electronic evaluation device are arranged.

3. Weighing beam according to Claim 1, characterised in that the supplementary beam (8) consists of two U-shaped rails (11, 12) spaced apart from each other, between which to each of both sides a support mounting (7) for a cable roller (4) or a hook (20) is arranged, which support mounting is connected to a base plate (13) on each of which a weighing cell (14) rests, each connected to a pendulum support (16) on which a pressure piece (17) connected to a traction piece (18) lies, the traction piece (18) being connected via a bolt (19) to the support mounting (3) of the load beam (1).

4. Weighing beam according to one of the preceding claims, characterised in that the electronic evaluation device and the digital display device (10) is arranged on the supplementary beam (8) so as to be visible, preferably in a housing (9), and both the weighing cells are connected via a cable connection (15) to the electronic evaluation device.

## Revendications

1. Traverse peseuse comprenant des capteurs transducteurs de force électroniques (14) et un dispositif d'exploitation à affichage numérique (10), une traverse porte-charge ou palonnier (1) dans les parties extrêmes duquel sont disposés des éléments de fixation (3) pour des câbles, caractérisée en ce que les capteurs transducteurs de force (14), constitués par exemple par des cellules de pesage, sont placés dans une traverse supplémentaire (8) disposée entre des éléments de fixation supplémentaires (4) et le palonnier (1) et sur laquelle est fixé le dispositif d'exploitation électronique à affichage numérique (10).

2. Traverse peseuse selon la revendication 1, caractérisée en ce que la traverse supplémentaire (8) comporte, dans la zone des éléments de fixation du palonnier (1), des dispositifs (7, 19), destinés à être mis en place entre les éléments de fixation, à l'intérieur desquels sont placés les capteurs de transmission de force, constitués par exemple par des cellules de mesure ou analogues, pour le dispositif d'exploitation électronique.

3. Traverse peseuse selon la revendication 1, caractérisée en ce que la traverse supplémentaire (8) est composée de deux profilés en U (11, 12) placés à distance l'un de l'autre et entre lesquels est agencé, sur chacun des deux côtés, un porte-palier (7) pour une poulie à câble (4) ou un crochet (20), porte-palier qui est relié à une plaque de base (13), avec disposition sur chaque plaque de base d'une cellule de pesage (14) attachée à un palier à rotule (16) sur lequel est placée une pièce de pression (17) reliée à une pièce de tirage (18), attachée elle-même par un axe (19) au porte-palier (3) sur le palonnier (1).

4. Traverse peseuse selon une des revendications précédentes, caractérisée en ce que le dispositif d'exploitation électronique et l'afficheur numérique (10) sont agencés de manière qu'ils soient visibles sur la traverse supplémentaire (8), de préférence à l'intérieur d'un boîtier (9), et les deux cellules de pesage sont connectées par des raccordements à câbles (15) au dispositif d'exploitation électronique.
